# EUROPÄISCHE PATENTSCHRIFT

(11) **EP 1 571 021 B1**
(45) Veröffentlichungstag und Bekanntmachung des Hinweises auf die Patenterteilung: **28.02.2007**
(21) Anmeldenummer: 05000711.1
(22) Anmeldetag: 14.01.2005
(51) Int. Cl.: B60H 1/22, B60H 1/00, F24H 9/02

(54) **Heizluftein- und Ausströmbaugruppe für ein Heizgerät**
Heated air intake and outlet assembly for a heater unit
Module d'aspiration et de soufflage d'air pour un appareil de chauffage

(30) Priorität: 03.03.2004 DE 102004010385
(43) Veröffentlichungstag der Anmeldung: 07.09.2005
(73) Patentinhaber: J. Eberspächer GmbH & Co. KG, 73730 Esslingen (DE)
(72) Erfinder: Schlecht, Patric, 73760 Ostfildern (DE); Collmer, Andreas, 73760 Ostfildern (DE)
(74) Vertreter: Ruttensperger, Bernhard

(56) Entgegenhaltungen:
- WO-A-02/096684
- DE-A1- 19 912 118
- US-A- 5 462 230

## Beschreibung

Die vorliegende Erfindung betrifft eine Heizlufteinströmbaugruppe gemäß dem Oberbegriff des Anspruchs 1 bzw. eine Heizluftausströmbaugruppe gemäß dem Oberbegriff des Anspruchs 7 für ein Luftheizgerät, wie es beispielsweise in Fahrzeugen eingesetzt wird.

Vor allem zum Einbau in den Fahrzeuginnenraum ausgestaltete Luftheizgeräte, also beispielsweise zum Einbau in Führerkabinen von Lastkraftfahrzeugen vorgesehene Heizgeräte, sind im Allgemeinen so ausgestaltet, dass sie ein langgestrecktes Heizgerätegehäuse aufweisen, das den Heizbrenner und den daran anschließenden Wärmetauscher umgibt. Die zu erwärmende Luft tritt in einem Heizlufteintrittsbereich in dieses Gehäuse ein, durchströmt es und tritt in erwärmter Art und Weise aus einem Heizluftaustrittsbereich wieder aus. Um die erwärmte Luft in gewünschte Bereiche des Fahrzeuginnenraums bzw. einer Führerkabine leiten zu können, ist im Allgemeinen am Heizluftaustrittsbereich eine Ausströmbaugruppe in Form einer mit einem Schlauchanschluss und einer Ausströmdüse versehenen Hutze vorgesehen. Diese Hutze ist im Allgemeinen als ein starres Kunststoffbauteil ausgebildet und kann beispielsweise so gestaltet sein, dass sie eine Ausströmrichtung bzw. ggf. eine Anschlussrichtung für einen Luftführungsschlauch vorgibt, die meist entweder parallel zur Heizgerätelängsachse (Einströmrichtung) oder mit einem vorgegebenen bzw. starren Winkel von z.B. 90° dazu ist. Um verschiedenen Einbausituationen gerecht werden zu können, werden von den Herstellern derartiger Geräte im Allgemeinen verschiedene Hutzen bereitgehalten, so dass beim Einbau in ein Fahrzeug dann entsprechend der Einbausituation und den vorhandenen Anschlussgegebenheiten die geeignete Hutze ausgewählt werden kann. Dies führt dazu, dass entweder eine größere Anzahl verschieden geformter Hutzen bereitgehalten werden muss, oder beim Einbau Kompromisse geschlossen werden müssen und ggf. die zur Weiterführung der erwärmten Luft möglicherweise vorhandenen Schlauchleitungen entsprechend verlegt werden müssen.

Eine Luftausströmbaugruppe gemäß dem Oberbegriff des Anspruchs 1 ist aus der US-5,462,230 bekannt. Bei dieser bekannten Baugruppe ist ein zum Anschluss an ein Fahrzeugheizgerät ausgebildeter Leitungsstutzen gekrümmt, so dass eine an einem Eintrittsbereich desselben vorgesehene Eintrittsebene und eine an einem Austrittsbereich desselben vorgesehene Austrittsebene näherungsweise senkrecht zueinander stehen. An diesem gekrümmten Stutzen bzw. einem damit fest verbundenen Gehäuse ist eine Ausströmdüse mit kugelartigem Außenumfang getragen, so dass die Ausströmdüse mit einer daran vorgesehenen Einströmebene und einer daran vorgesehenen Ausströmebene bezüglich des gekrümmten Stutzens und somit auch bezüglich der daran vorgesehenen Ausströmebene verschwenkt bzw. gedreht werden kann.

Eine Lufteinströmbaugruppe gemäß dem Oberbegriff des Anspruchs 7 ist aus der WO 02/096684 A1 bekannt. Diese Lufteinströmbaugruppe ist in einem ersten Endbereich an einer Luftkonditioniereinrichtung eines Fahrzeugs derart festlegbar, dass in diesem ersten Endbereich eine Verdrehbarkeit senkrecht zu einer Lufteinströmebene des Fahrzeugheizgeräts bzw. einer Luftausströmebene der Baugruppe möglich ist. Diese Baugruppe umfasst ein aus mehreren Teilen zusammengefügtes erstes Strömungsführungselement , das in seinem von der Verbindung mit dem Fahrzeugkonditioniergerät entfernten Ende verbunden werden kann mit einem ringartigen zweiten Strömungsführungselement, das wiederum über einen gummiartigen Verbindungsansatz an einem Gitter bzw. einer Wandung festgelegt werden kann.

Es ist die Aufgabe der vorliegenden Erfindung, eine Luftausströmbaugruppe bzw. eine Lufteinströmbaugruppe für ein Luftheizgerät vorzusehen, die eine erhöhte Einbauvariabilität aufweist.

Gemäß einem ersten Aspekt der vorliegenden Erfindung wird diese Aufgabe gelöst durch eine Luftausströmbaugruppe für ein Luftheizgerät, insbesondere für ein Fahrzeug, wie im Anspruch 1 definiert. Diese umfasst ein erstes Strömungsführungselement mit einer Einströmachse und ein zweites Strömungsführungselement mit einer Ausströmachse, wobei das zweite Strömungsführungselement an dem ersten Strömungsführungselement um eine Drehachse drehbar getragen ist, die unter einem ersten Winkel zur Einströmachse geneigt ist und unter einem zweiten Winkel zur Ausströmachse geneigt ist.

Durch die Möglichkeit, die beiden Strömungsführungselemente bezüglich einander zu drehen, und zwar um eine zur Einströmachse bzw. Ausströmachse geneigte Drehachse, wird die Möglichkeit geschaffen, entsprechend der gewünschten Einbausituation durch Drehen der beiden Strömungsführungselemente bezüglich einander die Raumlage der Ausströmachse zu verändern.

Die erfindungsgemäße Baugruppe ist so ausgestaltet, dass das erste Strömungsführungselement einen zur Festlegung an einem Heizgerätegehäuse ausgebildeten ersten Einströmbereich aufweist, der eine zu einer Ausströmebene des Heizgerätegehäuses im Wesentlichen parallele bzw. dieser entsprechende Einströmebene bereitstellt, und einen ersten Ausströmbereich aufweist, der eine bezüglich der ersten Einströmebene unter dem ersten Winkel geneigte erste Ausströmebene bereitstellt. Weiter ist vorgesehen, dass das zweite Strömungsführungselement einen zweiten Einströmbereich aufweist, der eine zweite Einströmebene bereitstellt, wobei das zweite Strömungsführungselement mit seinem zweiten Einströmbereich am ersten Ausströmbereich des ersten Strömungsführungselements um eine zur ersten Ausströmebene im Wesentlichen orthogonale Drehachse derart drehbar getragen ist, dass die erste Ausströmebene im Wesentlichen parallel zur zweiten Einströmebene liegt bzw. dieser entspricht, und einen zweiten Ausströmbereich aufweist, der eine zur zweiten Einströmebene unter dem zweiten Winkel geneigte zweite Ausströmebene bereitstellt.

Wenn dafür gesorgt ist, dass der erste Winkel und der zweite Winkel zueinander im Wesentlichen gleich sind, lässt sich unter anderem auch eine Raumlage der Ausströmachse vorgeben, die im Wesentlichen parallel zur Einströmachse ist.

Bei einer besonders bevorzugten Variante kann vorgesehen sein, dass die Summe der beiden Winkel, also die Summe aus erstem Winkel und zweitem Winkel, hier nur hinsichtlich des Betrags, nicht hinsichtlich der jeweiligen Raumlage betrachtet, im Bereich von 45° liegt. Vorteilhaft ist, dass die Drehachse zwischen dem ersten und dem zweiten Teil der Winkelhalbierenden dem maximal einstellbaren Ausströmwinkel entspricht.

Um die Variabilität bei der erfindungsgemäßen Baugruppe weiter erhöhen zu können, wird vorgeschlagen, dass das erste Strömungsführungselement zur Festlegung an einem Heizgerätegehäuse in einer Mehrzahl verschiedener Anbaustellungen ausgebildet ist, wobei die Anbaustellungen sich durch Drehung des ersten Strömungsführungselements um die Einströmachse unterscheiden.

Weiter trägt zur Erhöhung der Variabilität bei der Vorgabe der Ausströmrichtung bzw. der Raumlage der Ausströmachse bei, dass gemäß einem weiteren vorteilhaften Aspekt der vorliegenden Erfindung das erste Strömungsführungselement ein den ersten Einströmbereich aufweisendes erstes Teil und ein den ersten Ausströmbereich aufweisendes zweites Teil umfasst, und dass das zweite Teil an dem ersten Teil drehbar getragen ist. Dabei kann beispielsweise vorgesehen sein, dass das zweite Teil um eine zur ersten Einströmebene im Wesentlichen orthogonale Drehachse drehbar am ersten Teil getragen ist.

Gemäß einem weiteren Aspekt der vorliegenden Erfindung wird die eingangs genannte Aufgabe gelöst durch eine Lufteinströmbaugruppe für ein Luftheizgerät, insbesondere für ein Fahrzeug, wie im Anspruch 7 definiert. Diese umfasst ein erstes Strömungsführungselement mit einer Ausströmachse und ein zweites Strömungsführungselement mit einer Einströmachse, wobei das zweite Strömungsführungselement an dem ersten Strömungsführungselement um eine Drehachse drehbar getragen ist, die unter einem ersten Winkel zur Ausströmachse geneigt ist und unter einem zweiten Winkel zur Einströmachse geneigt ist.

Man erkennt also, dass die vorangehend beschriebene Baugruppe sowohl für den Lufteintritt als auch für den Luftaustritt genutzt werden kann, ohne dass irgendwelche größeren Umbaumaßnahmen erforderlich sind. Im Sinne der vorliegenden Erfindung ändert sich dabei lediglich die Zuordnung der Begriffe "Einströmen" und "Ausströmen" zu den verschiedenen Komponentenbereichen und es ändert sich selbstverständlich auch die Reihenfolge, in welcher die verschiedenen Strömungsführungselemente bzw. verschiedene Teile derselben durchströmt werden. Ansonsten sei jedoch darauf hingewiesen, dass selbstverständlich auch bei der Lufteinströmbaugruppe die vorangehend mit Hinblick auf die Luftausströmbaugruppe näher spezifizierten besonders vorteilhaften Weitergestaltungsvarianten realisiert sein können, wie ausgeführt, jedoch unter entsprechender Vertauschung von Einström- bzw. Ausströmfunktionalitäten.

Die vorliegende Erfindung betrifft ferner ein Heizgerät, insbesondere Fahrzeugheizgerät, umfassend eine in einem Heizgerätegehäuse aufgenommene Brenner- und Wärmetauscheranordnung, wobei in dem Heizgerätegehäuse ein Heizlufteintrittsbereich zur Zufuhr von zu erwärmender Luft zur Wärmetauscheranordnung vorgesehen ist und ein Heizluftaustrittsbereich zur Abfuhr von Heizluft aus dem Heizgerätegehäuse vorgesehen ist, wobei am Heizlufteintrittsbereich oder/und am Heizluftaustrittsbereich eine erfindungsgemäße Baugruppe angebracht ist.

Nachfolgend wird die Erfindung mit Bezug auf die beiliegenden Zeichnungen anhand bevorzugter Ausgestaltungsformen detailliert beschrieben. Es zeigt:
- Fig. 1: eine perspektivische Explosionsdarstellung eines Luftheizgeräts mit einer erfindungsgemäßen Baugruppe;
- Fig. 2: in ihren Darstellungen a), b) und c) verschiedene Einbausituationen der erfindungsgemäßen Baugruppe;
- Fig. 3: eine der Fig. 1 entsprechende Explosionsdarstellung einer alternativ ausgestalteten erfindungsgemäßen Baugruppe;
- Fig. 4: in ihren Darstellungen a), b) und c) verschiedene Einbausituationen der in Fig. 3 gezeigten Baugruppe.

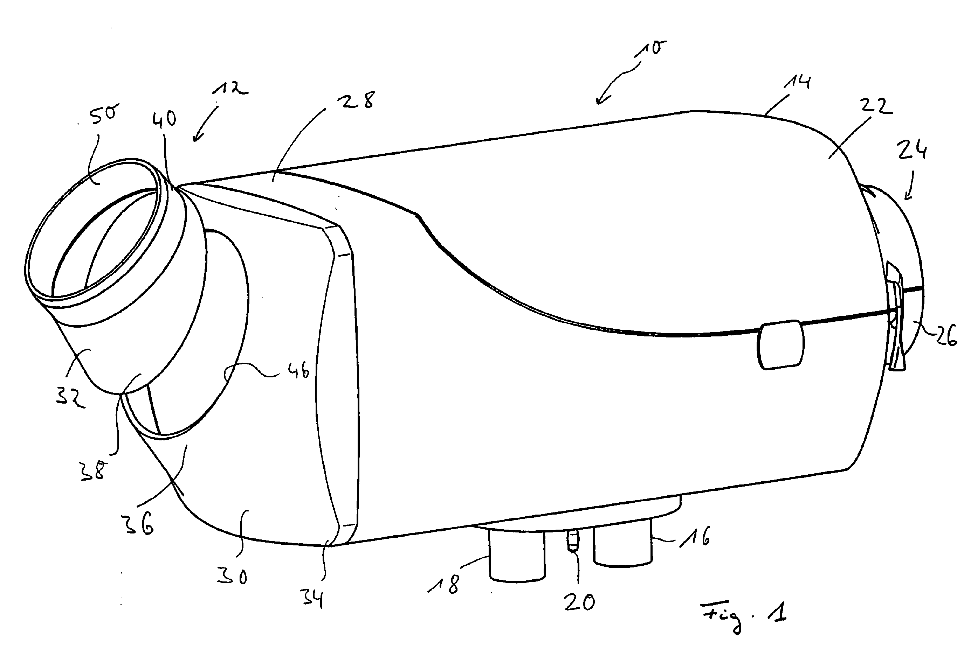

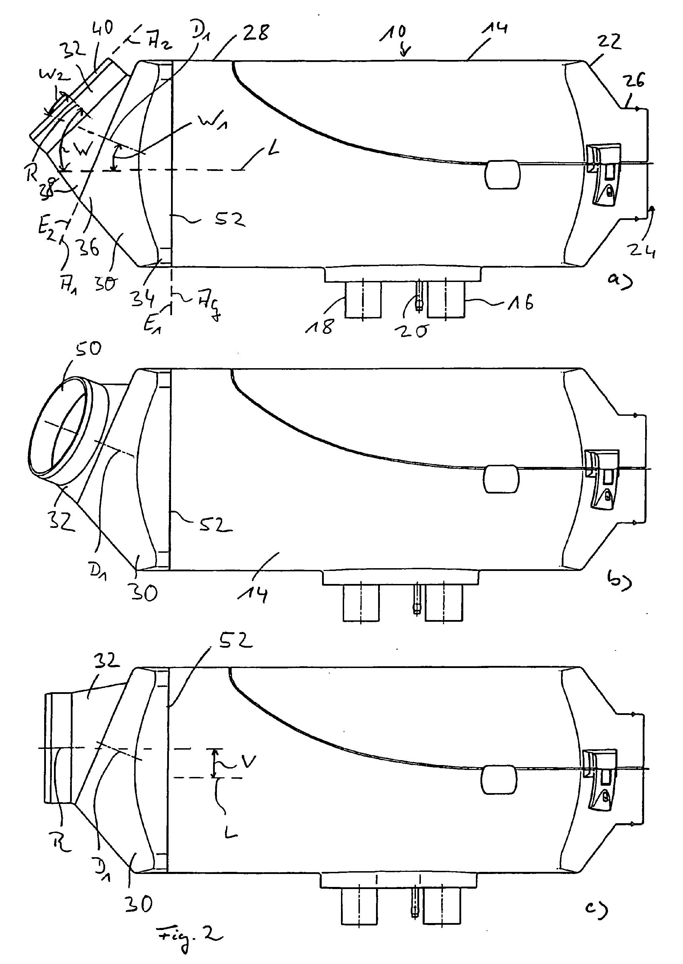

In den Fig. 1 und 2 ist eine erste Ausgestaltungsform eines erfindungsgemäßen Luftheizgerätes 10 für ein Fahrzeug bzw. einer daran vorgesehenen Luftausströmbaugruppe 12 gezeigt. Das in Fig. 1 perspektivisch dargestellte Luftheizgerät 10 umfasst ein Heizgerätegehäuse 14, in welchem ein in der Figur nicht erkennbarer Heizbrenner und daran anschließend ein Wärmetauscher vorgesehen ist. Die zur Verbrennung vorgesehene Luft wird durch einen Verbrennungslufteinlassstutzen 16 zum Brenner geleitet, und die Verbrennungsabgase verlassen das Heizgerätegehäuse bzw. die Wärmetauscheranordnung über einen Austrittsstutzen 18. Der zur Verbrennung erforderliche Brennstoff wird über einen Brennstoffeinlassstutzen 20 zum Heizbrenner geleitet. Da im Allgemeinen der Heizbrenner mit dem Verbrennungsluftgebläse und der Wärmetauscher in einer Längsrichtung des Heizgeräts aufeinander folgend angeordnet sind, ist auch das Heizgerätegehäuse 14 entsprechend langgestreckt. An einem Längsende 22 weist das Heizgerätegehäuse 14 einen Heizlufteintrittsbereich 24 auf. Dieser umfasst in der dargestellten Ausgestaltungsvariante einen mit dem Heizgerätegehäuse 14 integralen Stutzen 26, an dem beispielsweise ein Lufteintrittsschlauch angeschlossen werden kann oder über den die zu erwärmende Luft direkt in das Innere des Heizgerätegehäuses 14 eintreten kann. Am anderen Längsende 28 des Heizgerätegehäuses 14 ist dann die Luftausströmbaugruppe 12 vorgesehen. Diese bedeckt das andere Längsende 28 und führt in nachfolgend beschriebener Art und Weise die im Allgemeinen in Richtung der Längsachse L des Heizgeräts 10 bzw. des Heizgerätegehäuses 14 dort ausströmende und ggf. erwärmte Luft in definierter Art und Weise aus dem Bereich des Heizgeräts 10 weg. Insbesondere erkennt man in Fig. 2a), dass am Längsende 28 eine Gehäuseausströmebene A_{G} gebildet ist, die zur Strömungsrichtung und somit hier auch zur Längsachse L des Heizgeräts 10 bzw. des Heizgerätegehäuses 14 im Wesentlichen orthogonal steht. Im Sinne der vorliegenden Erfindung ist also eine jeweilige Ausströmebene bzw. nachfolgend noch beschriebene Einströmebene jeweils eine Ebene, die in einem jeweiligen Einström- oder Ausströmbereich im Wesentlichen orthogonal zur Strömungsrichtung bzw. Strömungsachse steht und somit im Wesentlichen den Querschnitt definiert, durch welchen die Luft im jeweiligen Bereich hindurch strömt, oder eine Ebene, in welcher eine zum Eintritt bzw. Austritt vorgesehene Öffnung liegt, die ggf. auch schräg durchströmt werden kann.

Die in den Fig. 1 und 2 gezeigte Luftausströmbaugruppe 12 umfasst zwei Strömungsführungselemente 30, 32. Das erste Strömungsführungselement 30 ist so ausgebildet bzw. geformt, dass es am Längsende 28 des Heizgerätegehäuses 14 angebracht werden kann. Das heißt, dass das erste Strömungsführungselement 30 einen ersten Einströmbereich 34 aufweist, der am Heizgerätegehäuse 14 festgelegt werden kann bzw. festgelegt ist und eine erste Einströmebene E₁ aufweist bzw. definiert, die bei am Heizgerätegehäuse 14 angebrachtem ersten Strömungsführungselement 30 im Wesentlichen parallel zur Ausströmebene A_{G} steht oder dieser entspricht. Das heißt, die erste Einströmebene E₁ bzw. der erste Einströmbereich 34 des ersten Strömungsführungselements 30 definieren eine Einströmrichtung, die im Wesentlichen der Ausströmrichtung der das Heizgerätegehäuse 14 verlassenden Luft entspricht und somit im Wesentlichen parallel zur Längsachse L des Heizgeräts 10 bzw. des Heizgerätegehäuses 14 ist.

Das erste Strömungsführungselement 30 weist ferner einen ersten Ausströmbereich 36 auf, der eine erste Ausströmebene A₁ bereitstellt bzw. definiert. Durch diese Ebene bzw. den somit definierten Querschnitt wird die aus dem ersten Strömungsführungselement 30 austretende Luft hindurch strömen, wobei auch hier näherungsweise eine Strömungsrichtung orthogonal zu dieser Ebene A₁ erreicht wird, ggf. aber auch mit gewissen Abweichungen insbesondere in den Randbereichen dieser Ausströmebene bzw. somit definierten Ausströmöffnung. Man erkennt vor allem in Fig. 2a), dass die erste Ausströmebene A₁ bezüglich der ersten Einströmebene E₁ und somit auch bezüglich der Gehäuseausströmebene A_{G} unter einem Winkel W₁ geneigt ist.

Das zweite Strömungsführungselement 32 weist einen zweiten Einströmbereich 38 auf, der im Bereich seiner Einströmöffnung eine zweite Einströmebene E₂ definiert. Das zweite Strömungsführungselement 32 ist mit seinem zweiten Einströmbereich 38 am ersten Ausströmbereich 36 des ersten Strömungsführungselements 30 angebracht. Die Anbringung ist derart, dass das zweite Strömungsführungselement 32 bezüglich des ersten Strömungsführungselements 30 drehbar ist, und zwar in einer Ebene, die der ersten Ausströmebene A₁ bzw. der dazu im Wesentlichen parallelen oder dieser entsprechenden zweiten Einströmebene E₂ entspricht. Es liegt somit eine Drehachse D₁ vor, die im Wesentlichen orthogonal zur ersten Ausströmebene A₁ und zur zweiten Einströmebene E₂ steht und somit unter dem Winkel W₁ geneigt ist bezüglich der ersten Einströmebene E₁ bzw. auch der Einströmachse, d.h. der Einströmrichtung, in welcher im ersten Einströmbereich 34 die erwärmte Luft in das erste Strömungsführungselement 30 eintritt.

Das zweite Strömungsführungselement 32 weist dann weiter einen zweiten Ausströmbereich 40 auf, der mit seiner Ausströmöffnung 50 eine zweite Ausströmebene A₂ definiert. Diese wiederum ist unter einem Winkel W₂ geneigt zur zweiten Einströmebene E₂.

Durch die Drehbarkeit des zweiten Strömungsführungselements 32 bezüglich des ersten Strömungsführungselements 30 und durch die Schrägstellung der Ebene E₁ bezüglich der Ebenen A₁ und E₂ und die Schrägstellung dieser beiden Ebenen A₁ und E₂ bezüglich der Ebene A₂ wird es möglich, das zweite Strömungsführungselement 32 in verschiedenen Positionierungen zu orientieren, so dass die dadurch definierte Austrittsachse bzw. Ausströmungsrichtung R verschiedene Raumrichtungen aufweisen wird und der zweite Ausströmbereich 40 entsprechend einer gewünschten Einbausituation positioniert werden kann. Der Winkel W kann durch Verdrehen der beiden Elemente stufenlos von beispielsweise 0° bis zu einem maximalen Wert verändert werden. Diese Variabilität kann dadurch noch überlagert sein, dass das erste Strömungsführungselement 30 in verschiedener Orientierung am Heizgerätegehäuse 14 festgelegt werden kann. Aufgrund der näherungsweise quadratischen Ausgestaltung des Heizgerätegehäuses 14 - bei Betrachtung von dessen Querschnitt - kann vorgesehen sein, dass das erste Strömungsführungselement 30 in zumindest zwei, vorzugsweise vier, bezüglich einander um 90° verdrehten Positionierungen am Heizgerätegehäuse 14 festgelegt werden kann, so dass die Variabilität auch bei der Orientierung des zweiten Ausgangsbereichs 40 noch deutlich vergrößert wird.

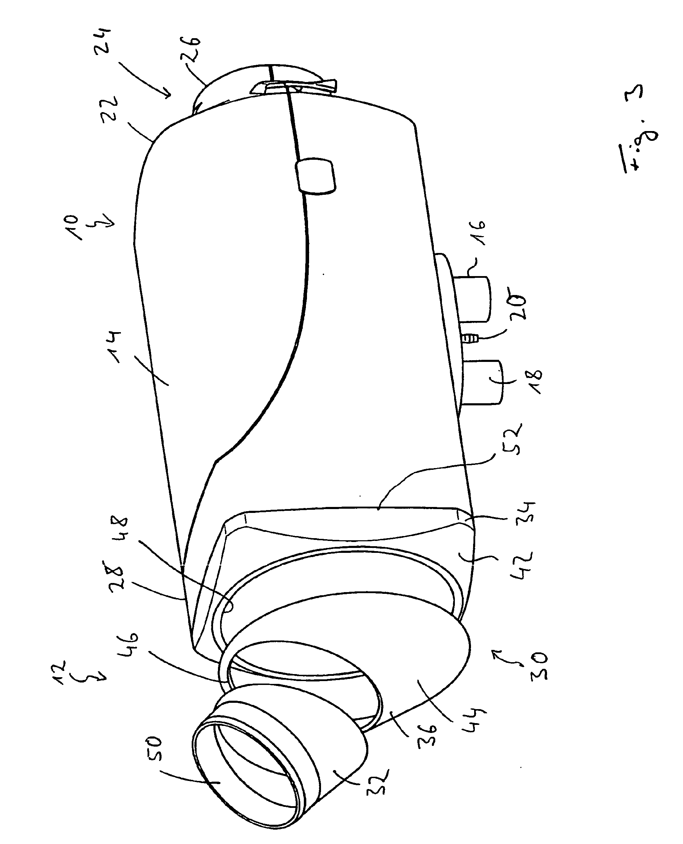

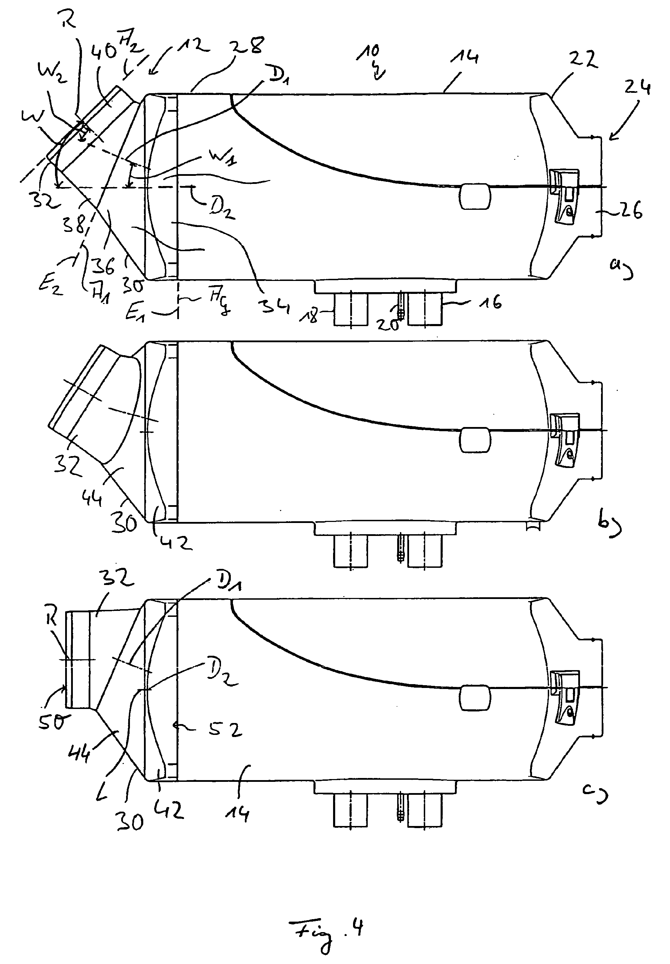

Eine alternative Ausgestaltungsform ist in den Fig. 3 und 4 gezeigt. Hier sind gleiche Baugruppen mit den gleichen Bezugszeichen, wie sie vorangehend bereits verwendet worden sind, bezeichnet.

Der wesentliche Unterschied besteht bei der in Fig. 3 gezeigten Ausgestaltungsvariante darin, dass das erste Strömungsführungselement 30 zweiteilig ausgestaltet ist. Es umfasst ein erstes Teil 42, das nunmehr den ersten Einströmbereich 34 bereitstellt und am Heizgerätegehäuse 14 festgelegt oder festzulegen ist. An diesem ersten Teil 42 ist dann ein zweites Teil 44 getragen, welches den ersten Ausströmbereich 36 des ersten Strömungsführungselements 30 bereitstellt. Das zweite Teil 44 ist am ersten Teil 42 drehbar getragen, und zwar um eine in der Fig. 4a) erkennbare Drehachse D₂, die im Wesentlichen der Längsmittenachse des Heizgerätegehäuses 14 entspricht. Diese Drehachse D₂ ist nunmehr in dem Maße bezüglich der Drehachse D₁ geneigt, in dem auch die erste Ausströmebene A₁ bezüglich der ersten Einströmebene E₁ geneigt ist.

Man erkennt in den Fig. 3 und 4 weiter, dass die an dem zweiten Teil 44 bereitgestellte und im Wesentlichen die erste Ausströmebene A₁ definierende Ausströmöffnung 46 bezüglich der Drehachse D₂ und somit einer am ersten Teil 42 gebildeten Ausströmöffnung 48 exzentrisch und im vorangehend angesprochenen Maße geneigt ist. So kann durch Drehen des zweiten Teils 44 bezüglich des ersten Teils 42 bereits die Raumlage des zweiten Einströmbereichs 38 und somit auch der zweiten Einströmebene E₂ des zweiten Strömungsführungselements 32 verändert werden. Dies ist vor allem auch beim Übergang von der Fig. 4b) zur Fig. 4c) erkennbar.

Auch bei dieser Ausgestaltungsvariante sind vorzugsweise die beiden Winkel W₁ und W₂ so gewählt, dass - bei Betrachtung der Winkelsumme - sich ein Gesamtwinkel W ergibt, der im Bereich von 45° liegt, und dass weiterhin die beiden Winkel W₁ und W₂ näherungsweise zueinander gleich sind. Auf diese Art und Weise lässt sich die in den Fig. 4c) und 2c) erkennbare Orientierung des zweiten Strömungsführungselements 32 erreichen, bei der die Ausströmachse bzw. Ausströmrichtung R im Wesentlichen parallel steht zur Einströmrichtung bzw. Einströmachse L, mit welcher die aus dem Heizgerätegehäuse 14 austretende Luft in das erste Strömungsführungselement 30 gelangt. Da sowohl bei der Ausgestaltungsform gemäß den Fig. 3 und 4, als auch bei der Ausgestaltungsform gemäß den Fig. 1 und 2, die am ersten Strömungsführungselement 30 bereitgestellte und entsprechend geneigt angeordnete Ausströmöffnung 46 bezüglich der Längsmittenachse L und somit auch dem Mittelbereich der ersten Einströmebene E₁ exzentrisch angeordnet ist, ergibt sich dabei jeweils auch der Versatz V zwischen Ausströmachse R, also im Wesentlichen dem Mittenbereich der am zweiten Strömungsführungselement 32 bereitgestellten Ausströmöffnung 50 und der Längsmittenachse des Heizgerätegehäuses 14 bzw. einer am ersten Strömungsführungselement 30 bereitgestellten Einströmöffnung 52.

Es sei abschließend darauf hingewiesen, dass selbstverständlich die vorangehend beschriebenen Ausgestaltungsformen der Luftausströmbaugruppe in gleicher Art und Weise am Längsende 22 des Heizgerätegehäuses 14 eingesetzt werden können, um auf diese Art und Weise den Lufteintritt variabel zu gestalten. In diesem Falle dient die Baugruppe 12 dann als Lufteinströmbaugruppe, wobei alle vorangehend beschriebenen Details bzw. Funktionalitäten hinsichtlich der Strömungsrichtung und der Bezeichnung "Einströmen" und "Ausströmen" in umgekehrter Weise zu betrachten sind. Das heißt, dass hier zunächst das zweite Strömungsführungselement 32 und dann das erste Strömungsführungselement 30 durchströmt werden, bevor die zu erwärmende Luft in das Heizgerätegehäuse 14 eintritt. Auf diese Art und Weise kann auch beim Anschluss eines der Luftzuführung dienenden Schlauchs eine höhere Variabilität erlangt werden.

Weiter sei darauf hingewiesen, dass nicht notwendigerweise an das zweite Strömungsführungselement 32 eine Schlauchleitung o.dgl. angeschlossen werden muss. Der zweite Auslassbereich 40 kann auch eine Auslassdüse definieren oder entsprechend geformt sein, so dass durch die entsprechende Orientierung vorgegeben werden kann, in welchen Bereich eines Innenraums bei einem Fahrzeug die erwärmte Luft strömen soll.

Ferner sei darauf hingewiesen, dass selbstverständlich die verschiedenen Strömungsführungselemente bzw. diese bildenden Teile aus Kunststoff geformt werden können. Die Drehkopplung der verschiedenen Teile bzw. Elemente kann in herkömmlicher Art und Weise beispielsweise dadurch erfolgen, dass an einem der Teile eine Umfangsnut gebildet ist, in welche ein Umfangsvorsprung am anderen Teil eingreifend positioniert werden kann. Wie voranstehend bereits erläutert, ist im Sinne der vorliegenden Erfindung der Ausdruck "Strömungsachse" nicht streng als die ausschließliche Strömungsrichtung der Luft in einem bestimmten Bereich zu interpretieren. Vielmehr gibt die Strömungsachse vor, welche Haupttendenz die strömende Luft in einem jeweils betrachteten Bereich oder Bauteil haben wird.

## Patentansprüche

1. Luftausströmbaugruppe für ein Luftheizgerät, insbesondere für ein Fahrzeug, umfassend ein erstes Strömungsführungselement (30) mit einer Einströmachse (L) und ein zweites Strömungsführungselement (32) mit einer Ausströmachse (R), wobei das zweite Strömungsführungselement (32) an dem ersten Strömungsführungselement (30) um eine Drehachse (D₁) drehbar getragen ist, die unter einem ersten Winkel (W₁) zur Einströmachse (L) geneigt ist und unter einem zweiten Winkel (W₂) zur Ausströmachse (R) geneigt ist, wobei
das erste Strömungsführungselement (30) einen zur Festlegung an einem Heizgerätegehäuse (14) ausgebildeten ersten Einströmbereich (34) aufweist, der eine zu einer Ausströmebene (A_{G}) des Heizgerätegehäuses (14) im Wesentlichen parallele bzw. dieser entsprechende erste Einströmebene (E₁) bereitstellt, und einen ersten Ausströmbereich (36) aufweist, der eine bezüglich der ersten Einströmebene (E₁) unter dem ersten Winkel (W₁) geneigte erste Ausströmebene (A₁) bereitstellt, wobei
das zweite Strömungsführungselement (32) einen zweiten Einströmbereich (38) aufweist, der eine zweite Einströmebene (E₂) bereitstellt, **dadurch gekennzeichnet, dass** das zweite Strömungsführungselement (32) mit seinem zweiten Einströmbereich (38) am ersten Ausströmbereich (36) des ersten Strömungsführungselements (30) um eine zur ersten Ausströmebene (A₁) im Wesentlichen orthogonale Drehachse (D₁) derart drehbar getragen ist, dass die erste Ausströmebene (A₁) im Wesentlichen parallel zur zweiten Einströmebene (E₂) liegt bzw. dieser entspricht, und einen zweiten Ausströmbereich (40) aufweist, der eine zur zweiten Einströmebene (E₂) unter dem zweiten Winkel (W₂) geneigte zweite Ausströmebene (A₂) bereitstellt.

2. Baugruppe nach Anspruch 1,
**dadurch gekennzeichnet, dass** der erste Winkel (W₁) und der zweite Winkel (W₂) zueinander im Wesentlichen gleich sind.

3. Baugruppe nach einem der Ansprüche 1 oder 2,
**dadurch gekennzeichnet, dass** die Summe aus erstem Winkel (W₁) und zweitem Winkel (W₂) im Bereich von 45° liegt.

4. Baugruppe nach einem der Ansprüche 1 bis 3,
**dadurch gekennzeichnet, dass** das erste Strömungsführungselement (30) zur Festlegung an einem Heizgerätegehäuse (14) in einer Mehrzahl verschiedener Anbaustellungen ausgebildet ist, wobei die Anbaustellungen sich durch Drehung des ersten Strömungsführungselements (30) um die Einströmachse (L) unterscheiden.

5. Baugruppe nach einem der Ansprüche 1 bis 4,
**dadurch gekennzeichnet, dass** das erste Strömungsführungselement (30) ein den ersten Einströmbereich (34) aufweisendes erstes Teil (42) und ein den ersten Ausströmbereich (36) aufweisendes zweites Teil (44) umfasst, und dass das zweite Teil (44) an dem ersten Teil (42) drehbar getragen ist.

6. Baugruppe nach Anspruch 5,
**dadurch gekennzeichnet, dass** das zweite Teil (44) um eine zur ersten Einströmebene (E₁) im Wesentlichen orthogonale, zweite Drehachse (D₂) drehbar am ersten Teil (42) getragen ist.

7. Lufteinströmbaugruppe für ein Luftheizgerät, insbesondere für ein Fahrzeug, umfassend ein erstes Strömungsführungselement (30) mit einer Ausströmachse (L) und ein zweites Strömungsführungselement (32) mit einer Einströmachse (R), wobei das zweite Strömungsführungselement (32) an dem ersten Strömungsführungselement (30) um eine Drehachse (D₁) drehbar getragen ist, die unter einem ersten Winkel (W₁) zur Ausströmachse (L) geneigt ist und unter einem zweiten Winkel (W₂) zur Einströmachse geneigt ist, wobei
das erste Strömungsführungselement (30) einen zur Festlegung an einem Heizgerätegehäuse (14) ausgebildeten ersten Ausströmbereich (34) aufweist, der eine zu einer Einströmebene (A_{G}) des Heizgerätegehäuses (14) im Wesentlichen parallele bzw. dieser entsprechende erste Ausströmebene (E₁) bereitstellt, und einen ersten Einströmbereich (36) aufweist, der eine bezüglich der ersten Ausströmebene (E₁) unter dem ersten Winkel (W₁) geneigte erste Einströmebene (A₁) bereitstellt, wobei das zweite Strömungsführungselement (32) einen zweiten Ausströmbereich (38) aufweist, der eine zweite Ausströmebene (E₂) bereitstellt, wobei das zweite Strömungsführungselement (32) mit seinem zweiten Ausströmbereich (38) am ersten Einströmbereich (36) des ersten Strömungsführungselements (30) um eine zur ersten Einströmebene (A₁) im Wesentlichen orthogonale Drehachse (D₁) derart drehbar getragen ist, dass die erste Einströmebene (A₁) im Wesentlichen parallel zur zweiten Ausströmebene (E₂) liegt bzw. dieser entspricht, **dadurch gekennzeichnet, dass** das zweite Strömungsführungselement (32) einen zweiten Einströmbereich (40) aufweist, der eine zur zweiten Ausströmebene (E₂) unter dem zweiten Winkel (W₂) geneigte zweite Einströmebene (A₂) bereitstellt.

8. Heizgerät, insbesondere Fahrzeugheizgerät, umfassend eine in einem Heizgerätegehäuse aufgenommene Brenner- und Wärmetauscheranordnung, wobei in den Heizgerätegehäuse (14) ein Heizlufteintrittsbereich (24) zur Zufuhr von zu erwärmender Luft zur Wärmetauscheranordnung vorgesehen ist und ein Heizluftaustrittsbereich zur Abfuhr von Heizluft aus dem Heizgerätegehäuse (14) vorgesehen ist, wobei am Heizlufteintrittsbereich (24) oder/und am Heizluftaustrittsbereich eine Baugruppe nach einem der vorangehenden Ansprüche vorgesehen ist.

## Claims

1. An air outflow sub-assembly for an air heating appliance, in particular for a vehicle, comprising a first flow conducting element (30) with an inflow axis (L) and a second flow conducting element (32) with an outflow axis (R), wherein the second flow conducting element (32) is supported rotatably on the first flow conducting element (30) about an axis of rotation (D₁) which is inclined at a first angle (W₁) to the inflow axis (L) and is inclined at a second angle (W₂) to the outflow axis (R), wherein the first flow conducting element (30) has a first inflow portion (34) which is designed to be fixed to a heating appliance housing (14) and which provides a first inflow plane (E₁) substantially parallel or corresponding to an outflow plane (A_{G}) of the heating appliance housing (14), and has a first outflow portion (36) which provides a first outflow plane (A₁) inclined relative to the first inflow plane (E₁) at the first angle (W₁), wherein the second flow conducting element (32) has a second inflow portion (38) which provides a second inflow plane (E₂), **characterised in that** the second flow conducting element (32) is so rotatably supported with its second inflow portion (38) on the first outflow portion 36 of the first flow conducting element (30) about an axis of rotation (D₁) substantially orthogonal to the first outflow plane (A₁) that the first outflow plane (A₁) is substantially parallel to the second inflow plane (E₂) or corresponds thereto, and has a second outflow portion (40) which provides a second outflow plane (A₂) inclined relative to the second inflow plane (E₂) at the second angle (W₂).

2. A sub-assembly according to Claim 1, **characterised in that** the first angle (W₁) and the second angle (W₂) are substantially equal to one another.

3. A sub-assembly according to Claim 1 or 2, **characterised in that** the sum of the first angle (W₁) and second angle (W₂) is in the region of 45°.

4. A sub-assembly according to any one of Claims 1 to 3, **characterised in that**, for fixing to a heating appliance housing (14), the first flow conducting element (30) is formed in a plurality of different mounting positions, wherein the mounting positions are varied by rotating the first flow conducting element (30) about the inflow axis (L).

5. A sub-assembly according to any one of Claims 1 to 4, **characterised in that** the first flow conducting element (30) comprises a first part (42) having the first inflow portion (34) and a second part having the first outflow portion (36), and **in that** the second part (44) is rotatably supported on the first part (42).

6. A sub-assembly according to Claim 5, **characterised in that** the second part (44) is supported rotatably on the first part (42) about a second axis of rotation (D₂) substantially orthogonal to the first inflow plane (E₁).

7. An air inflow sub-assembly for an air heating appliance, in particular for a vehicle, comprising a first flow conducting element (30) with an outflow axis (L) and a second flow conducting element (32) with an inflow axis (R), wherein the second flow conducting element (32) is supported on the first flow conducting element (30) rotatably about an axis of rotation (D₁) which is inclined at a first angle (W₁) to the outflow axis (L) and is inclined at a second angle (W₂) to the inflow axis, wherein the first flow conducting element (30) has a first outflow portion (34) which is designed to be fixed to a heating appliance housing (14) and which provides a first outflow plane (E₁) substantially parallel or corresponding to an inflow plane (A_{G}) of the heating appliance housing (14), and has a first inflow portion (36) which provides a first inflow plane (A₁) inclined relative to the first outflow plane (E₁) at the first angle (W₁), wherein the second flow conducting element (32) has a second outflow portion (38) which provides a second outflow plane (E₂), wherein the second flow conducting element (32) is so rotatably supported with its second outflow portion (38) on the first inflow portion (36) of the first flow conducting element (30) about an axis of rotation (D₁) substantially orthogonal to the first inflow plane (A₁) that the first inflow plane (A₁) is substantially parallel to the second outflow plane (E₂) or corresponds thereto, **characterised in that** the second flow conducting element (32) has a second inflow portion (40) which provides a second inflow plane (A₂) inclined relative to the second outflow plane (E₂) at the second angle (W₂).

8. A heating appliance, in particular a vehicle heating appliance, comprising a burner and a heat-exchanger assembly accommodated in a heating appliance housing, wherein in the heating appliance housing (14) a heating air inlet portion (24) is provided for feeding air to be heated to the heat exchanger assembly and a heating air outlet portion for removing heating air from the heating appliance housing (14), wherein a sub-assembly according to any one of the preceding Claims is provided on the heating air-inlet portion (24) and/or on the heating air-outlet portion.

## Revendications

1. Module de sortie d'air pour un appareil de chauffage d'air, en particulier pour un véhicule, comportant un premier élément de guidage de flux (30) avec un axe d'entrée (L) et un second élément de guidage de flux (32) avec un axe de sortie (R), le second élément de guidage de flux (32) étant porté sur le premier élément de guidage de flux (30) avec faculté de rotation autour d'un axe de rotation (D₁) qui est incliné sous un premier angle (W₁) par rapport à l'axe d'entrée (L) et sous un second angle (W₂) par rapport à l'axe de sortie (R),
dans lequel le premier élément de guidage de flux (30) comprend une première zone d'entrée (34) réalisée pour être immobilisée sur un boîtier d'appareil de chauffage (14) et qui représente un premier plan d'entrée (E₁) sensiblement parallèle ou correspondant à un plan de sortie (A_{G}) du boîtier d'appareil de chauffage (14), et il comprend une première zone de sortie (36) qui représente un premier plan de sortie (A₁) incliné sous le premier angle (W₁) par rapport au premier plan d'entrée (E₁),
et dans lequel le second élément de guidage de flux (32) comprend une seconde zone d'entrée (38) qui représente un second plan d'entrée (E₂),
**caractérisé en ce que** le second élément de guidage de flux (32) est porté par sa seconde zone d'entrée (38) au niveau de la première zone de sortie (36) du premier élément de guidage de flux (30) avec faculté de rotation autour d'un axe de rotation (D₁) sensiblement orthogonal au premier plan de sortie (A₁), de telle sorte que le premier plan de sortie (A₁) est sensiblement parallèle ou correspond au second plan d'entrée (E₂), et comprend une seconde zone de sortie (40) qui représente un second plan de sortie (A₂) incliné sous le second angle (W₂) par rapport au second plan d'entrée (E₂).

2. Module selon la revendication 1,
**caractérisé en ce que** le premier angle (W₁) et le second angle (W₂) sont sensiblement identiques l'un à l'autre.

3. Module selon l'une des revendications 1 ou 2,
**caractérisé en ce que** la somme du premier angle (W₁) et du second angle (W₂) est de l'ordre de 45°.

4. Module selon l'une des revendications 1 à 3,
**caractérisé en ce que** le premier élément de guidage de flux (30) est réalisé pour être immobilisé sur un boîtier d'appareil de chauffage (14) dans une pluralité de positions d'assemblage différentes, les positions d'assemblage se distinguant de par la rotation du premier élément de guidage de flux (30) autour de l'axe d'entrée (L).

5. Module selon l'une des revendications 1 à 4,
**caractérisé en ce que** le premier élément de guidage de flux (30) comprend une première partie (42) présentant la première zone d'entrée (34), et une seconde partie (44) présentant la première zone de sortie (36), et **en ce que** la seconde partie (44) est portée avec faculté de rotation sur la première partie (42).

6. Module selon la revendication 5,
**caractérisé en ce que** la seconde partie (44) est portée sur la première partie (42) avec faculté de rotation autour d'un second axe de rotation (D₂) sensiblement orthogonal au premier plan d'entrée (E₁).

7. Module d'entrée d'air pour un appareil de chauffage d'air, en particulier pour un véhicule, comportant un premier élément de guidage de flux (30) avec un axe de sortie (L) et un second élément de guidage de flux (32) avec un axe d'entrée (R), le second élément de guidage de flux (32) étant porté sur le premier élément de guidage de flux (30) avec faculté de rotation autour d'un axe de rotation (D₁) qui est incliné sous un premier angle (W₁) par rapport à l'axe de sortie (L) et sous un second angle (W₂) par rapport à l'axe d'entrée (R),
dans lequel le premier élément de guidage de flux (30) comprend une première zone de sortie (34) réalisée pour être immobilisée sur un boîtier d'appareil de chauffage (14) et qui représente un premier plan de sortie (E₁) sensiblement parallèle ou correspondant à un plan d'entrée (A_{G}) du boîtier d'appareil de chauffage (14), et il comprend une première zone d'entrée (36) qui représente un premier plan d'entrée (A₁) incliné sous le premier angle (W₁) par rapport au premier plan de sortie (E₁),
et dans lequel le second élément de guidage de flux (32) comprend une seconde zone de sortie (38) qui représente un second plan de sortie (E₂), le second élément de guidage de flux (32) est porté par sa seconde zone de sortie (38) sur la première zone d'entrée (36) du premier élément de guidage de flux (30) avec faculté de rotation autour d'un axe de rotation (D₁) sensiblement orthogonal au premier plan d'entrée (A₁), de telle sorte que le premier plan d'entrée (A₁) est sensiblement parallèle ou correspond au second plan de sortie (E₂), **caractérisé en ce que** le second élément de guidage de flux (32) comprend une seconde zone d'entrée (40) qui représente un second plan d'entrée (A₂) incliné sous le second angle (W₂) par rapport au second plan de sortie (E₂).

8. Appareil de chauffage, en particulier appareil de chauffage de véhicule, comportant un agencement brûleur et échangeur de chaleur reçu dans le boîtier d'appareil de chauffage, une zone d'entrée d'air de chauffage (24) étant prévue dans le boîtier d'appareil de chauffage (14) pour alimenter en air à chauffer l'agencement échangeur de chaleur, et une zone de sortie d'air de chauffage étant prévue pour évacuer l'air de chauffage hors du boîtier d'appareil de chauffage (14), un module selon l'une des revendications précédentes étant prévu sur la zone d'entrée d'air de chauffage (24) et/ou sur la zone de sortie d'air de chauffage.
